# EUROPEAN PATENT SPECIFICATION

(11) **EP 2 490 930 B1**
(45) Date of publication and mention of the grant of the patent: **21.09.2016**
(21) Application number: 10768622.2
(22) Date of filing: 20.10.2010
(51) Int. Cl.: B62K 3/02, B62K 3/06, B62K 19/36, B62J 1/08

(54) **A FRAME COMPRISING A SEAT TUBE THAT EXTENDS AT A DIFFERENT ANGLE THAN THE STEERING HEAD SHAFT, AND AN ADAPTER SUITABLE FOR USE THEREWITH**
RAHMEN MIT EINEM SITZROHR MIT VERLAUF IN EINEM ANDEREN WINKEL ALS DIE LENKKOPFACHSE UND DAFÜR GEEIGNETER ADAPTER
CADRE COMPRENANT UN TUBE DE SELLE S'ÉTENDANT SUIVANT UN ANGLE DIFFÉRENT DE CELUI DE L'ARBRE DU TUBE DE DIRECTION, ET ADAPTATEUR ADAPTÉ À ÊTRE UTILISÉ AVEC LEDIT CADRE

(30) Priority: 24.10.2009 NL 2003703
(43) Date of publication of application: 29.08.2012
(73) Proprietor: Enjoy Services & Development B.V., 8239 AD Lelystad (NL)
(72) Inventor: DE KREEK, Pieter Samuël, NL-8243 VZ Lelystad (NL)
(74) Representative: Klavers, Cornelis
(86) International application number: PCT/NL2010/050696
(87) International publication number: WO 2011/049445

(56) References cited:
- EP-A1- 0 668 209
- EP-A1- 1 792 813
- WO-A1-86/05457
- WO-A2-2005/035346
- DE-A1- 3 703 312
- DE-A1- 19 620 964
- DE-U1- 20 010 137
- US-A- 2 623 573
- US-B1- 6 719 257

## Description

The present invention relates to a vehicle, viz. a two-wheeled or multi-wheeled vehicle, such as a bicycle, a mountain bike, a tricycle, a moped, a motorcycle according to the preamble of claim 1.

The present invention also relates to a frame suitable for use in such a vehicle according to the preamble of claim 8.

Such a vehicle, for example in the form of a bicycle, is generally known.

In order to make known bicycles more suitable for use by taller riders, the saddle is adjusted for height in the longitudinal direction of the seat tube, parallel to the steering head shaft, thereby creating a greater freedom of movement.

A vehicle and frame according to the preambles of claims 1 and 8 are known from WO 2005/035346 A2, which discloses a bicycle having a frame. The frame is provided with a seat tube between a saddle to be fitted and a crank axle, and with a down tube between the crank axle and a steering head in which a rotatable steering head shaft is to be mounted. The steering head shaft makes an angle of A degrees with the horizontal through the crank axle, whereby the angle which the seat tube makes with the aforesaid horizontal is between 4 and 10 degrees, or more than 6 degrees smaller than the angle A. The down tube, or the central axis of the down tube, is shown to be located at the crank axle, or the central axis of the crank axle, and as described the down tube is connected to the chain stay, and in particular to its chain stay horn.

Means for adjusting the saddle in height are not disclosed therein.

The object of the present invention is to provide a vehicle in which even more space is gained by height adjustment of the saddle.

In order to accomplish that object, the vehicle and frame according to the invention is characterised by the features of claims 1 and 8 respectively.

The advantage of the vehicle and the frame according to the invention is that the receding seat tube provides the rider of the vehicle with more legroom - not only in upward direction but also to the front in relation to the handlebars - upon adjustment in longitudinal direction of the saddle mounted thereon. This is important in particular in the case of larger and taller people, in order to prevent said people being squeezed in between the handlebars and the saddle, also in a high position of the saddle, and having too little freedom of movement when rotating the pedals on the crank axle or even touching the handlebars with their knees. Thus the receding seat tube will automatically provide more freedom of movement upon height adjustment of the saddle.

The advantage of the forward location is that it provides an improved setup and also enables in particular taller cyclists to assume a straighter position. It has been found that this also leads to an improved power transfer to the pedals.

The advantage of using the adapter is that it prevents the occurrence of play of the saddle and the saddle pillar on which the - possibly spring-loaded - saddle is mounted, resulting in an enhanced mechanical stability and an increased capacity to take up forces.

Further possible embodiments as defined in the other claims and their concomitant advantages will be discussed in more detail in the description below.

The vehicle according to the present invention will now be explained in more detail with reference to the figures below, in which like parts are indicated by the same numerals. In the drawings:
Figure 1 shows a combination of possible embodiments of the bare frame provided with an adapter, which frame is suitable for use in the vehicle according to the invention; and
Figures 2A, 2B, 2C, 2D and 2E are views of the assembled components and of the individual components of said assembly, respectively, that are relevant as regards the joining together of the adapter and the frame.

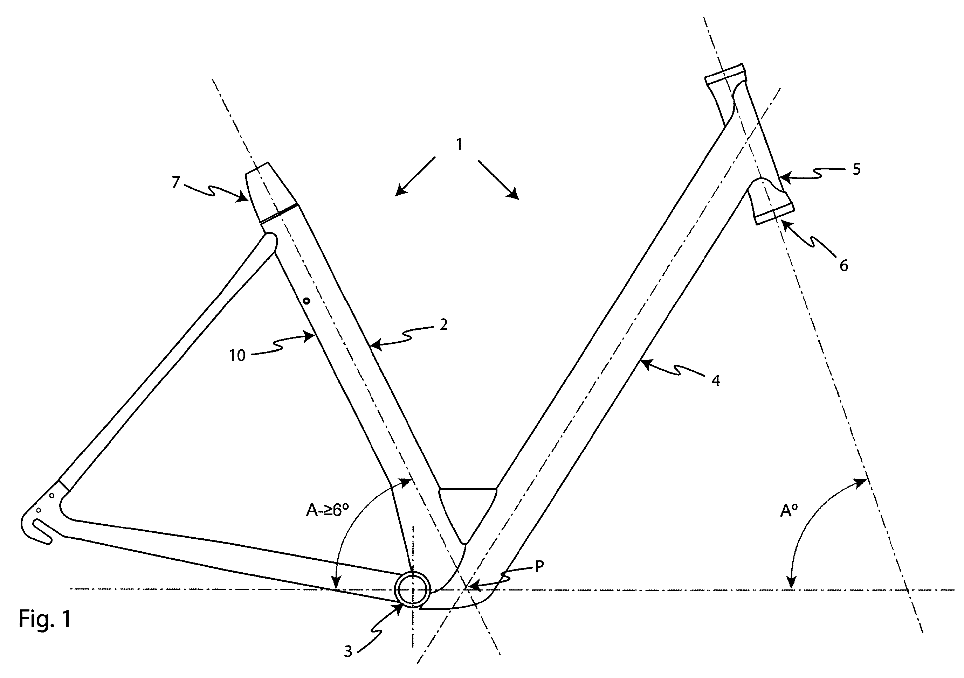

Figure 1 shows a frame 1, in this case a possible two-wheeled vehicle, such as a bicycle, a mountain bike, a moped, a motor scooter or a motorcycle. In principle the vehicle may also be a multi-wheeled vehicle, such as a three-wheeled or a four-wheeled vehicle. As is shown, the frame 1, for example of a bicycle (not shown), comprises a seat tube 2, which is disposed between a saddle (not shown) and a crank axle 3 (schematically indicated). The frame 1 further comprises a down tube 4, which extends between the crank axle 3 and a steering head 5. The steering head 5 is made up of a tube provided with bearings, in which a rotatable steering head shaft 6 with handlebars connected thereto is to be mounted. The steering head shaft 6, whose central axis is shown, makes an angle of A degrees with the horizontal through the crank axle 3. The angle which the seat tube 2, in particular the central axis of said seat tube, makes with the aforesaid horizontal is between 4 and 10 degrees, in particular between 5 and 8 degrees, more in particular about 6 degrees, smaller than the angle A. In the illustrated embodiment, the aforesaid angle is more than 6 degrees smaller than the angle A. As a result, additional space is created in upward direction when the aforesaid saddle is moved upwards, which space can be useful used by the rider, so that the latter's knees will less easily bump against the handlebars while pedalling.

In another embodiment, which also has advantages for smaller people, because, on the contrary, the space that is available in forward direction is additionally limited in lower positions of the saddle, the lower crank axle end of the seat tube 2 is mounted forward of the crank axle 3, in particular against the down tube 4. In practice it generally suffices if the seat tube 2, or the central axis of said seat tube 2, is located more than 25 mm, in particular more than 40 mm, forward of the crank axle 3 or the central axis of the crank axle 3.

In a special embodiment shown in figure 1, the down tube 4, in particular the central axis of the down tube 4, intersects the horizontal forward of the crank axle 3 or the central axis thereof. In this way some additional space is nevertheless created also for smaller people, if desired. As the figure furthermore shows, the central axes of the seat tube 2 and the down tube 4 even intersect forward of the central axis of the crank axle 3 at one point, viz. point P.

The embodiments described in the foregoing provide additional freedom of design as regards the manner in which the technical functional requirements as regards the required dimensions and space can be realised.

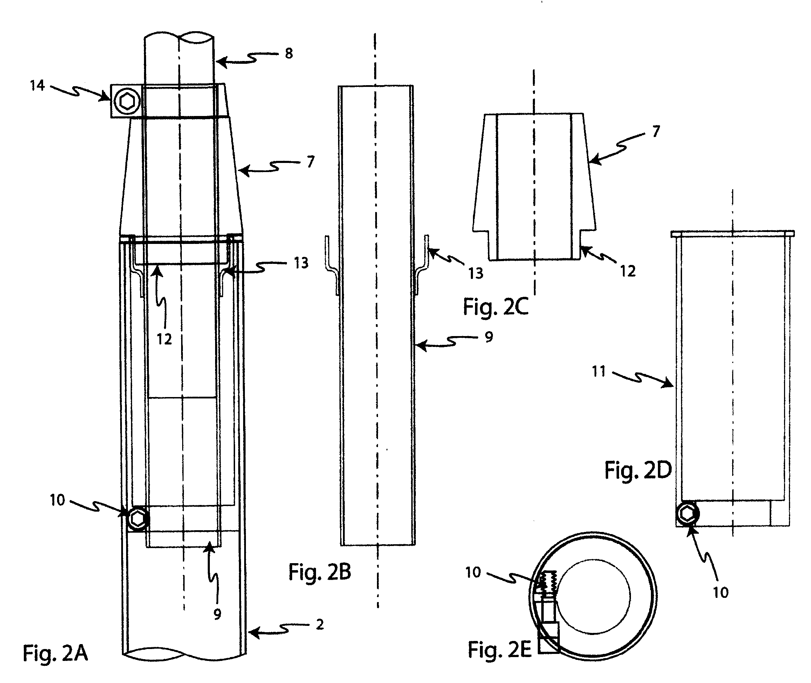

Figures 2A, 2B, 2C, 2D and 2E are views of the assembled components at the saddle end of the seat tube 2 and of the individual components of said assembly, respectively. The frame 1 is provided with an adapter 7 mounted between the saddle and the seat tube 2, which adapter is exchangeable and whose length depends on the length along which the saddle with its saddle pillar 8 extends above the saddle end of the seat tube 2, and thus on the length of the rider. The conical shape (in upward direction) of the adapter 7, which is generally made of plastic material, gives the bicycle as a whole a more acceptable appearance. The length of the adapter 7 is usually selected in dependence on the amount of legroom between the saddle and the handlebars that the rider needs.

Disposed within the hollow seat tube 2 is a saddle pillar clamping sleeve 9, which is fixed therein by means of a first clamping element 10, for example a bolt or an expandable ring. Figure 2A shows an embodiment in which first a seat tube clamp 11 has been inserted into the saddle pillar end of the seat tube 2 and subsequently the saddle pillar clamping sleeve 9 has been inserted into the seat tube clamp 11, after which the two have been fixed in position in the seat tube 2 by means of the clamping element 10. The adapter 7, which is conical in shape in this embodiment, has subsequently been placed over the saddle pillar clamping sleeve 9 on the seat tube 2, with an adapter portion 12 having a limited diameter engaging hooks 13 (schematically indicated), for example in the form of a ring which is open on one side. The saddle pillar 8 slips into the saddle pillar clamping sleeve 9 and a second clamping element 14 clamps the selected adapter 7 with the end of the saddle pillar clamping sleeve 9 firmly onto the saddle pillar 8.

## Claims

1. A vehicle, viz. a two-wheeled or multi-wheeled vehicle, such as a bicycle, a mountain bike, a tricycle, a moped, a motorcycle, which vehicle comprises a frame (1) provided with a seat tube (2) between a saddle to be fitted and a crank axle (3), and with a down tube (4) between the crank axle (3) and a steering head (5) in which a rotatable steering head shaft (6) is to be mounted, which steering head shaft (6) makes an angle of A degrees with the horizontal through the crank axle (3), whereby the angle which the seat tube (2) makes with the aforesaid horizontal is between 4 and 10 degrees, in particular between 5 and 8 degrees, more in particular about 6 degrees, smaller than the angle A, or more than 6 degrees smaller than the angle A, **characterised in that** the down tube (4), or the central axis of the down tube, is located forward of the crank axle (3), or the central axis of the crank axle, that the frame (1) is provided with an exchangeable adapter (7) to be fitted between the saddle and the seat tube (2), that the seat tube (2) is provided with a first clamping element (10) by means of which a saddle pillar clamping sleeve (9) inserted into the seat tube (2) can be fixed in position, and that the seat tube (2) accommodates a seat tube clamp (11) together with the saddle pillar clamping sleeve (9) inserted therein, which are both fixed in position in the seat tube (2) by means of the first clamping element (10).

2. A vehicle according to claim 1, **characterised in that** the seat tube (2) is mounted against the down tube (4), forward of the crank axle (3), in particular **in that** the central axis of the seat tube (2) is located more than 25 mm, more in particular more than 40 mm, forward of the crank axle (3) or the central axis of the crank axle (3).

3. A vehicle according to claim 1 or 2, **characterised in that** that the central axes of the seat tube (2) and the down tube (4) intersect at one point (P) forward of the central axis of the crank axle (3).

4. A vehicle according to either one of claims 1-3, **characterised in that** the adapter (7) is configured as an adapter that can be detached from the seat tube (2) and/or from the saddle or the saddle pillar (8) connected thereto.

5. A vehicle according to either one of claims 1-4, **characterised in that** the length of the adapter (7) has been selected in dependence on the amount of legroom between the saddle and the handlebars that the driver needs.

6. A vehicle according to either one of claims 1-5, **characterised in that** the adapter (7) mounted on the seat tube (2), and a saddle pillar (8) inserted therein, on which saddle pillar (8) the saddle may be mounted, can be fixed to the saddle pillar clamping sleeve (9) inserted into the seat tube (2) by means of a second clamping element (14).

7. A vehicle according to any one of claims 1-6, **characterised in that** said adapter (7) is made of plastic material.

8. A frame (1) suitable for use in a vehicle according to any one of claims 1-7, the frame (1) is provided with a seat tube (2) between a saddle to be fitted and a crank axle (3), and with a down tube (4) between the crank axle (3) and a steering head (5) in which a rotatable steering head shaft (6) is to be mounted, which steering head shaft (6) makes an angle of A degrees with the horizontal through the crank axle (3), whereby the angle which the seat tube (2) makes with the aforesaid horizontal is between 4 and 10 degrees, in particular between 5 and 8 degrees, more in particular about 6 degrees, smaller than the angle A, or more than 6 degrees smaller than the angle A, **characterised in that** the down tube (4), or the central axis of the down tube, is located forward of the crank axle (3), or the central axis of the crank axle, that the frame (1) is provided with an exchangeable adapter (7) to be fitted between the saddle and the seat tube (2), that the seat tube (2) is provided with a first clamping element (10) by means of which a saddle pillar clamping sleeve (9) inserted into the seat tube (2) can be fixed in position, and that the seat tube (2) accommodates a seat tube clamp (11) together with the saddle pillar clamping sleeve (9) inserted therein, which are both fixed in position in the seat tube (2) by means of the first clamping element (10).

## Patentansprüche

1. Fahrzeug, das heißt, ein zwei- oder mehrrädriges Fahrzeug, wie beispielsweise ein Fahrrad, ein Mountainbike, ein Dreirad, ein Moped, ein Motorrad, wobei das Fahrzeug einen Rahmen (1) umfasst, der mit einem Sitzrohr (2) zwischen einem anzubauenden Sattel und einer Kurbelachse (3) versehen ist und mit einem Unterrohr (4) zwischen der Kurbelachse (3) und einem Steuerkopf (5), in den ein drehbarer Steuerkopfschaft (6) zu montieren ist, wobei der Steuerkopfschaft (6) zur Horizontalen durch die Kurbelachse (3) einen Winkel von A Grad bildet, wobei der Winkel, den das Sitzrohr (2) mit der zuvor genannten Horizontalen bildet, zwischen 4 und 10 Grad, speziell zwischen 5 und 8 Grad, spezieller etwa 6 Grad kleiner als der Winkel A oder mehr als 6 Grad kleiner als der Winkel A ist, **dadurch gekennzeichnet, dass** das Unterrohr (4) oder die Mittelachse des Unterrohrs vor der Kurbelachse (3) oder der Mittelachse der Kurbelachse angeordnet ist, dass der Rahmen (1) mit einem austauschbaren Adapter (7) versehen ist, der zwischen dem Sattel und dem Sitzrohr (2) einzubauen ist, dass das Sitzrohr (2) mit einem ersten Klemmelement (10) versehen ist, mit dem eine Sattelstützen-Spannhülse (9), die in das Sitzrohr (2) eingesetzt ist, in einer Position fixiert werden kann, und dass das Sitzrohr (2) eine Sitzrohrklemme (11) zusammen mit der in diese eingesetzten Sattelstützen-Spannhülse (9) beherbergt, wobei beide mittels des ersten Klemmelements (10) im Sitzrohr (2) in Position fixiert sind.

2. Fahrzeug nach Anspruch 1, **dadurch gekennzeichnet, dass** das Sitzrohr (2) vor der Kurbelachse (3) an das Unterrohr (4) montiert ist, speziell dadurch, dass die Mittelachse des Sitzrohres (2) mehr als 25 mm, spezieller mehr als 40 mm vor der Kurbelachse (3) oder der Mittelachse der Kurbelachse (3) angeordnet ist.

3. Fahrzeug nach Anspruch 1 oder 2, **dadurch gekennzeichnet, dass** sich die Mittelachse des Sitzrohres (2) und die des Unterrohres (4) an einem Punkt (P) vor der Mittelachse der Kurbelachse (3) schneiden.

4. Fahrzeug nach einem der Ansprüche 1 bis 3, **dadurch gekennzeichnet, dass** der Adapter (7) als ein Adapter gestaltet ist, der vom Sitzrohr (2) und/oder dem Sattel oder der Sattelstütze (8) gelöst werden kann, die damit verbunden sind.

5. Fahrzeug nach einem der Ansprüche 1 bis 4, **dadurch gekennzeichnet, dass** die Länge des Adapters (7) abhängig vom Umfang des vom Fahrer benötigten Beinraumes zwischen dem Sattel und der Lenkstange gewählt ist.

6. Fahrzeug nach einem der Ansprüche 1 bis 5, **dadurch gekennzeichnet, dass** der Adapter (7), der an das Sitzrohr (2) montiert ist, und eine darin eingesetzte Sattelstütze (8), an die der Sattel montiert werden kann, mittels eines zweiten Klemmelements (14) an der Sattelstützen-Spannhülse (9) fixiert werden können, die in das Sitzrohr (2) eingesetzt ist.

7. Fahrzeug nach einem der Ansprüche 1 bis 6, **dadurch gekennzeichnet, dass** der Adapter (7) aus Kunststoff angefertigt ist.

8. Rahmen (1), geeignet zur Verwendung in einem Fahrzeug nach einem der Ansprüche 1 bis 7, wobei der Rahmen (1) mit einem Sitzrohr (2) zwischen einem anzubauenden Sattel und einer Kurbelachse (3) versehen ist und mit einem Unterrohr (4) zwischen der Kurbelachse (3) und einem Steuerkopf (5), in den ein drehbarer Steuerkopfschaft (6) zu montieren ist, wobei der Steuerkopfschaft (6) zur Horizontalen durch die Kurbelachse (3) einen Winkel von A Grad bildet, wobei der Winkel, den das Sitzrohr (2) mit der zuvor genannten Horizontalen bildet, zwischen 4 und 10 Grad, speziell zwischen 5 und 8 Grad, spezieller etwa 6 Grad kleiner als der Winkel A oder mehr als 6 Grad kleiner als der Winkel A ist, **dadurch gekennzeichnet, dass** das Unterrohr (4) oder die Mittelachse des Unterrohrs vor der Kurbelachse (3) oder der Mittelachse der Kurbelachse angeordnet ist, dass der Rahmen (1) mit einem austauschbaren Adapter (7) versehen ist, der zwischen dem Sattel und dem Sitzrohr (2) einzubauen ist, dass das Sitzrohr (2) mit einem ersten Klemmelement (10) versehen ist, mit dem eine Sattelstützen-Spannhülse (9), die in das Sitzrohr (2) eingesetzt ist, in einer Position fixiert werden kann, und dass das Sitzrohr (2) eine Sitzrohrklemme (11) zusammen mit der in diese eingesetzten Sattelstützen-Spannhülse (9) beherbergt, wobei beide mittels des ersten Klemmelements (10) im Sitzrohr (2) in Position fixiert sind.

## Revendications

1. Véhicule, à savoir véhicule à deux roues ou à roues multiples, tel qu'une bicyclette, un mountain bike, un tricycle, un cyclomoteur, une motocyclette, lequel véhicule comprend un châssis (1) pourvu d'un tube de siège (2) entre une selle à ajuster et un axe de manivelle (3), et comportant un tube descendant (4) entre l'axe de manivelle (3) et une tête de direction (5) dans laquelle un arbre de tête de direction rotatif (6) doit être monté, lequel arbre de tête de direction (6) décrit un angle de A degrés par rapport à l'horizontale à travers l'axe de manivelle (3), ce qui a pour effet que l'angle que le tube de siège (2) décrit par rapport l'horizontale précitée est de 4 à 10 degrés, en particulier de 5 à 8 degrés, plus particulièrement d'environ 6 degrés, inférieur à l'angle A, ou de plus de 6 degrés inférieur à l'angle A, **caractérisé en ce que** le tube descendant (4) ou l'axe central du tube descendant est situé à l'avant de l'axe de manivelle (3) ou de l'axe central de l'axe de manivelle, que le châssis (1) est pourvu d'un adaptateur échangeable (7) à ajuster entre la selle et le tube de siège (2), que le tube de siège (2) est pourvu d'un premier élément de serrage (10) au moyen duquel un manchon de serrage de colonne de siège (9) inséré dans le tube de siège (2) peut être fixé en position et que le tube de siège (2) abrite un serre-tube de siège (11) en même temps que le manchon de serrage de colonne de siège (9) inséré dedans qui sont tous deux fixés en position dans le tube de siège (2) au moyen du premier élément de serrage (10).

2. Véhicule selon la revendication 1, **caractérisé en ce que** le tube de siège (2) est monté contre le tube descendant (4), à l'avant de l'axe de manivelle (3), en particulier **en ce que** l'axe central du tube de siège (2) se situe plus de 25 mm, plus particulièrement plus de 40 mm, à l'avant de l'axe de manivelle (3) ou de l'axe central de l'axe de manivelle (3).

3. Véhicule selon la revendication 1 ou 2, **caractérisé en ce que** les axes centraux du tube de siège (2) et du tube descendant (4) se coupent à un point (P) à l'avant de l'axe central de l'axe de manivelle (3).

4. Véhicule selon l'une quelconque des revendications 1-3, **caractérisé en ce que** l'adaptateur (7) est conçu sous forme d'un adaptateur qui peut être détaché du tube de siège (2) et/ou de la selle ou de la colonne de selle (8) qui lui est connecté.

5. Véhicule selon l'une quelconque des revendications 1-4, **caractérisé en ce que** la longueur de l'adaptateur (7) a été sélectionnée en fonction de l'espace pour les jambes entre la selle et les manettes dont le conducteur a besoin.

6. Véhicule selon l'une quelconque des revendications 1-5, **caractérisé en ce que** l'adaptateur (7) monté sur le tube de siège (2) et une colonne de siège (8) insérée dedans, sur laquelle colonne de siège (8) la selle peut être montée, peut être fixé au manchon de serrage de colonne de selle (9) inséré dans le tube de siège (2) au moyen d'un second élément de serrage (14).

7. Véhicule selon l'une quelconque des revendications 1-6, **caractérisé en ce que** ledit adaptateur (7) est composé de matière plastique.

8. Châssis (1) susceptible d'être utilisé dans un véhicule selon l'une quelconque des revendications 1-7, ce châssis (1) étant pourvu d'un tube de siège (2) entre une selle à ajuster et un axe de manivelle (3), et comportant un tube descendant (4) entre l'axe de manivelle (3) et une tête de direction (5) dans laquelle un arbre de tête de direction rotatif (6) doit être monté, lequel arbre de tête de direction (6) décrit un angle de A degrés par rapport à l'horizontale à travers l'axe de manivelle (3), ce qui a pour effet que l'angle que le tube de siège (2) décrit par rapport à l'horizontale précitée est de 4 à 10 degrés, en particulier de 5 à 8 degrés, plus particulièrement d'environ 6 degrés inférieur à l'angle A, ou de plus de 6 degrés inférieur à l'angle A, **caractérisé en ce que** le tube descendant (4) ou l'axe central du tube descendant se situe à l'avant de l'axe de manivelle (3) ou de l'axe central de l'axe de manivelle, que le châssis (1) est pourvu d'un adaptateur échangeable (7) à ajuster entre la selle et le tube de siège, que le tube de siège (2) est pourvu d'un premier élément de serrage (10) au moyen duquel un manchon de serrage de prendre de siège (9) inséré dans le tube de siège (2) peut être fixé en position et que le tube de siège (2) abrite un serre-tube de siège (11) en même temps que le manchon de serrage de colonne de siège (9) inséré dedans qui sont tous deux fixés en position dans le tube de siège (2) au moyen du premier élément de serrage (10).
